# EUROPÄISCHE PATENTSCHRIFT

(11) **EP 2 412 630 B1**
(45) Veröffentlichungstag und Bekanntmachung des Hinweises auf die Patenterteilung: **11.09.2019**
(21) Anmeldenummer: 10170932.7
(22) Anmeldetag: 27.07.2010
(51) Int. Cl.: B64C 27/82, H02K 21/24, H02K 5/128, H02K 7/09, H02K 9/19

(54) **Antrieb eines Heckrotors eines Hubschraubers**
Drive for a tail rotor of a helicopter
Entraînement d'une hélice de queue d'un hélicoptère

(43) Veröffentlichungstag der Anmeldung: 01.02.2012
(73) Patentinhaber: Siemens Aktiengesellschaft, 80333 München (DE)
(72) Erfinder: Hamann, Jens, 90765 Fürth (DE); Köpken, Hans-Georg, 91056, Erlangen (DE); Stoiber, Dietmar, 90763, Fürth (DE)

(56) Entgegenhaltungen:
- WO-A1-2008/032430
- WO-A1-2009/115247
- WO-A2-2010/048928
- DE-A1- 10 242 833

## Beschreibung

Die Erfindung betrifft einen Antrieb eines Heckrotors eines Hubschraubers durch eine dynamoelektrische Maschine.

Ein Hubschrauber weist im Normalfall zwei Rotoren auf, wobei ein Hauptrotor durch eine vertikale ausgerichtete Welle angetrieben wird und ein Heckrotor durch eine axial ausgerichtete Welle. Dabei versteht man unter einem Rotor sowohl die Rotorblätter als auch den Rotorkopf an dem diese Rotorblätter befestigt sind. Bei Hubschraubern ist eine vergleichsweise hohe spezifische Leistung also Kilowatt/Kilogramm anzustreben, um die Traglast des Hubschraubers zu erhöhen.

Ein Hubschrauber ist ein vertikal startendes und landendes Luftfahrzeug, das mittels Motorkraft ein oder mehrere Rotoren für Auftrieb und Vortrieb benutzt, diese arbeiten als sich drehende Tragflächen oder Flügel oder Rotorblätter, weshalb man Hubschrauber zu den Drehflüglern zählt.

Bei den gebräuchlichsten Einrotorsystemen entsteht an der Rotorachse des Hauptrotors ein Drehmoment, das eine entgegen gesetzte Drehung des Rumpfes des Hubschraubers bewirkt. Um dies zu vermeiden, gibt es unter anderem die Möglichkeit, einen seitlichen Gegenschub durch einen Heckrotor vorzusehen.

Die Heckrotorkonfiguration ist eine weitverbreitete Bauweise bei Hubschraubern, um das von dem Hauptrotors erzeugte Drehmoment auszugleichen. Dabei wird von dem in einem Heckausleger des Hubschraubers außerhalb des Rotorkreises des Hauptrotors angebrachte Heckrotor ein horizontaler Schub erzeugt um der Drehung des Rumpfes um die Hochachse entgegen zu wirken. Neben dem Drehmomentausgleich dient der Heckrotor auch zur Steuerung des Hubschraubers um die Hauptachse, also der Rechts/Links-Drehung. Der Schub des Heckrotors wird in der Regel durch ein Gestänge gesteuert, das den kollektiven Einstellwinkel der Rotorblätter ändert. Der Heckrotor beansprucht ca. 20% der gesamten Antriebsleistung eines Hubschraubers.

Nachteilig bei den bisherigen Antrieben eines Heckrotors ist, dass ein vergleichsweise hoher Anteil der Antriebsleistung und des Gesamtgewichts des Hubschraubers auf den Heckrotor entfällt.

Um das Drehmoment auszugleichen, ist aus der WO 09/143669 A1 ein Hubschrauber mit Doppelrotoren bekannt, dessen Rotoren durch Elektromotoren getrieben werden.

Aus der DE 39 15 526 A1 ist ein Duplexelektromotor bekannt, bei dem ein Hohlrotor von außen und von innen in Rotation versetzt wird und so eine vergleichsweise höhere Leistung gegenüber herkömmlichen Elektromotoren erzielt werden soll.

Aus der DE 198 56 647 A1 ist ein elektrischer Hochmomentmotor bekannt, der als hochpolige dauermagneterregte elektrische Maschine aufgebaut ist und einen hohlzylindrischen Läufer aus Weicheisen aufweist, der beidseitig mit Permanentmagneten belegt ist, koaxial zwischen einem äußeren und einem inneren Stator angeordnet ist und mit einer im Maschinengehäuse gelagerten Welle drehbar verbunden ist.

Die DE 102 42 833 A1 offenbart einen Antrieb mit einer permanenterregten Transversalflussmaschine in Duplexanordnung, die derart arbeitet, dass zwischen zwei Statoren, die jeweils ein Drehstrom-Ringwicklungssystem aufweisen, ein scheibenförmiger Läufer angeordnet ist, der Permanentmagnete aufweist und an dessen Außenumfang ein anzutreibendes Objekt angeordnet ist, wobei das Lagerkonzept eine gemeinsame radiale Lagerung und eine gemeinsame axiale Lagerung von Antrieb und anzutreibendem Objekt vorsieht.

Ausgehend davon liegt der Erfindung die Aufgabe zugrunde, das Leistungsgewicht eines Hubschraubers weiter zu reduzieren bei einem gleichzeitig einfachen Aufbau eines Heckrotors.

Die Lösung der gestellten Aufgabe gelingt durch einen Heckrotor eines Hubschraubers mit einem Antrieb gemäß Anspruch 1.

Erfindungsgemäß wird beim Antrieb des Heckrotors ein Transversalflussmotor in Duplexanordnung vorgesehen, der Ringwicklungen aufweist. Um erfindungsgemäß die Ausnutzung des Transversalflussmotors zu steigern, ist dieser Motor in einer Duplexanordnung angeordnet, d.h. sowohl auf der einen als auch auf der anderen Seite des scheibenförmigen Läufers sind Statoren mit Ringwicklungen vorgesehen. Dabei sind zwei Statoren derart angeordnet, dass sich deren Nuten und Zähne einander gegenüberstehen und dazwischen ein mit Permanentmagneten versehener scheibenförmiger Läufer angeordnet ist.

Jeder Stator weist ein Ringwicklungssystem auf, dessen Wicklungen konzentrisch um eine Achse des Heckrotors angeordnet sind. Die Ringwicklungen des gesamten Antriebs des Heckrotors sind als zwei Drehstromwicklungssysteme aufgebaut, wobei jeder Stator ein Drehstromringwicklungssystem aufweist. Zur axialen Lageregelung des Läufers und damit des gesamten Heckrotors werden nunmehr die beiden Ringwicklungssysteme angezogen. Dabei wird die grundsätzliche Methode der symmetrischen Komponenten benutzt, um eine vereinfachte Analyse einer Unsymmetrie in einem Drehstromsystem oder einem System höherer Ordnung vorzunehmen.

Dabei wird ein unsymmetrisches System in Mitsystem, Gegensystem und Nullsystem aufgeteilt.

Erfindungsgemäß wird dabei das Nullsystem dieser beiden Ringwicklungssysteme unabhängig voneinander geregelt. Somit kann die notwendige Axialkraft des Lagers elektrisch aufgebracht werden.

Zur Erzeugung und zur Steuerung der axialen Lagerkraft ist es grundsätzlich möglich, jedoch nicht zur vorliegenden Efindung gehörend, nicht nur das Nullsystem sondern auch andere Kombinationen der Phasenströme der Ringwicklungssysteme vorzusehen. Das Nullsystem ist eine Kombination von Phasenströmen, die das Drehmoment des Antriebs nicht beeinflusst. Dies ist besonders vorteilhaft, da die Drehmomenterzeugung und die axiale Tragkraft somit entkoppelt sind.

Eine weitere günstige Kombination von Phasenströmen wird durch die feldorientierte Regelung erreicht, bei der über einen Frequenzumrichter eine erweiterte Drehzahl und Positioniergenauigkeit eines Antriebs erreicht wird. Dieser Ansatz ist jedoch ebenfalls nicht zur vorliegenden Erfindung gehörend. Bei der axialen magnetischen Lagerung ist nur ein Drehstromzeiger in der d-Richtung aufgrund der d/q-Transformation wichtig. Allgemein bekannt erzeugt bei einem Synchronmotor die q-Richtung des Drehstromes das Drehmoment. Die d-Richtung greift nicht auf das Drehmoment über. Somit lässt sich erfindungsgemäß der Transversalflussmotor so gestalten, dass die d-Richtung die Anziehungskraft zwischen Läufer und jeweiligem Stator in eindeutiger und stetiger Weise steuert. Für diese Vektorregelung ist die Lage des Polrades, also des Läufers wichtig. Diese kann sensorlos oder über Encoder erfolgen.

Somit ist außer dem Nullsystem der Drehstromsysteme auch grundsätzlich, jedoch nicht zu dieser Erfindung gehörend, die d-Richtung des Drehstromes zum Aufbau eines axialen Magnetlagers geeignet.

Wenn nunmehr erfindungsgemäß das Nullsystem des Drehstroms zur Erzeugung und zur Steuerung der axialen Lagerkraft benutzt wird, dann sollte der Läufer des Antriebs auch ferromagnetische Eigenschaften aufweisen, also insbesondere Weicheisen. Damit stellt sich eine verwertbare Kraftdichte der Nullsystem-Feldlinien auf die Scheibe des Läufers ein. Somit sind die Permanentmagnete auf einer dünnen ferromagnetischen Platte, in Form einer Beilagscheibe anzubringen. Um die Wirbelstromverluste im scheibenförmigen Läufer zu verringern ist die Scheibe, fächerartig, oder speichenartig oder konzentrisch geschlitzt ausgeführt.

Die Größe eines Motors wird durch das Drehmoment bestimmt. Um nun eine hohe Drehmomentausbeute zu erhalten, wird ein hochpoliger Motor vorgesehen, bei dem die Pole des Läufers auf einem vergleichsweise großen Durchmesser liegen.

Um die Ausnutzung des Antriebs weiter zu steigern, sind die Ringwicklungen der Statoren mit Öl gekühlt. Dabei ist es besonders vorteilhaft, wenn das Ringwicklungssystem eines Stators von einer Can, also einer geschlossenen Ölwanne umfasst ist, in der das Öl zirkuliert, das die Wärmeverluste der Wicklung abführt und somit zur Kühlung des jeweiligen Wicklungssystems beiträgt.

In einer weiteren Ausführung umfasst die Can nicht nur das Ringwicklungssystem, sondern den gesamten Stator, sodass auch die Eisenverluste des Stators abgeführt werden können.

Der Läufer ist in einer Scheibenform ausgeführt und ist an seinen den Statoren zugewandten Seiten mit hochtemperaturfesten Permanentmagneten versehen.

Um die Wirbelströme innerhalb der Permanentmagnete weiter zu reduzieren, sind die Permanentmagnete geschichtet aufgebaut. Die Struktur der Schichtung ist dabei so, dass die potentiellen Pfade der Wirbelströme innerhalb der Permanentmagneten wirksam unterbrochen werden.

Über die Luftspalte zwischen dem Läufer und den Statoren wird der Läufer mittels durchstreichender Luft gekühlt.

Der Läufer, der als Scheibe ausgeführt ist, weist als Trägermaterial zumindest zum Teil, neben Materialen mit ferromagnetischen Eigenschaften auch hochfestes Karbon/Kevlar mit eingebetteten hochtemperaturfesten Permanentmagneten auf. Am Außenumfang des scheibenförmigen Läufers sind vorzugsweise in radialer Verlängerung der Scheibe die Rotorblätter des Heckrotors angeordnet sind.

Die Erfindung sowie vorteilhafte Ausgestaltungen der Erfindung sind anhand der beiliegenden Zeichnung zu entnehmen; darin zeigen:
- FIG 1: einen Hubschrauber,
- FIG 2: Antrieb eines Heckrotors des Hubschraubers.

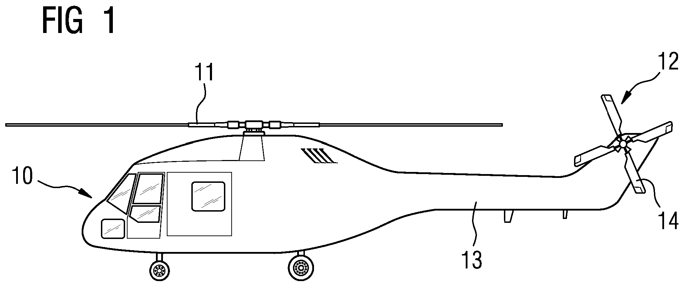

FIG 1 zeigt in einer prinzipiellen Darstellung einen Hubschrauber 10 mit einem Hauptrotor 11 und einem beispielhaft dargestellten Heckrotor 12, der an einem Heckausleger 13 angeordnet ist. Dabei wird von dem in dem Heckausleger 13 des Hubschraubers 10 außerhalb des Rotorkreises des Hauptrotors 11 angebrachte Heckrotor ein horizontaler Schub erzeugt um der Drehung des Rumpfes um die Hochachse entgegen zu wirken. Neben dem Drehmomentausgleich dient der Heckrotor 12 auch zur Steuerung des Hubschraubers 10 um die Hauptachse, also der Rechts/Links-Drehung.

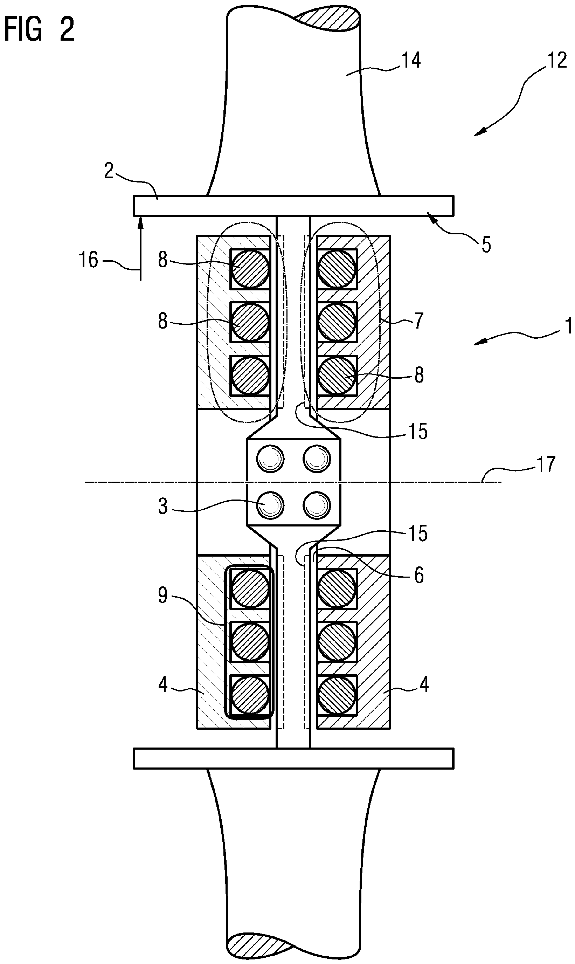

FIG 2 zeigt einen erfindungsgemäßen Antrieb 1 eines Heckrotors 12 eines Hubschraubers 10 durch eine permanenterregte Transversalflussmaschine in Duplexanordnung. Dabei befinden sich sowohl links als auch rechts von einem Läufer 5 ein Stator 4 mit Ringwicklungen 8, die konzentrisch um eine Achse 17 angeordnet sind. Der Läufer 5 ist über Radiallager 3 an dieser Achse 17 drehbar gelagert. Am radial äußeren Rand des scheibenförmigen Läufers 5 ist eine Tragkonstruktion 2 vorgesehen, an der die Propellerflügel 14 des Heckrotors 12 angeordnet sind. In dieser Ausführungsform sind dabei die Propellerflügel 14 in radialer Verlängerung des scheibenförmigen Läufers 5 angeordnet.

Ebenso werden Ausführungen von dem allgemeinen erfinderischen Gedanken mit umfasst, die eine andere konstruktive Anordnung der Propellerflügel 14 vorsieht, z.B. an der Außenfläche einer topfförmigen Ausführung der Tragkonstruktion 2.

Das zumindest eine Radiallager 3 übernimmt nur die Radiallagerung und die radialen Kräfte, während eine Axiallagerung des Läufers 5 durch die beiden Ringwicklungssysteme 8, vorzugsweise Drehstromringwicklungssysteme im jeweiligen Stator 4 erfolgt. Es liegt also eine axiale Magnetlagerung vor. Für diese geregelte magnetische Lagerung wird in dieser Ausführungsform der magnetische Rückschluss des Transversalflussmotors verwendet. Die beiden Nullsysteme der Drehstromringwicklungssysteme werden unabhängig voneinander geregelt um den Läufer 5 und damit letztlich den Heckrotor 12 axial in seiner vorgeschriebenen Position zu halten, bzw. zu lagern.

Die prinzipiell dargestellten Feldlinien 7 werden durch das jeweilige Nullsystem erregt.

Durch die Gewichtung des linken und des rechten Nullsystem-Stromes lässt sich die Anziehungskraft nach Größe und Vorzeichen - also links oder rechts - steuern.

In einem Heckrotor 12 treten aerodynamische Propellerkräfte hauptsächlich in axialer Richtung auf, die nun durch die axiale magnetische Lagerung aufgenommen werden.

Der Läufer 5 mit seinen auf einer Scheibe angeordneten Permanentmagneten 15 bewegt sich im Luftspalt zwischen beiden Statoren 4 in Luft und ist luftgekühlt. Die Wirbelstromverluste, der auf dem Läufer 5 angeordneten Permanentmagnete 15 werden gemäß einer Ausführungsform durch eine Fremdbelüftung abgeführt.

In einer weiteren besonders vorteilhaften Ausführungsform wird der die Aerodynamik des Heckrotors 12 so ausgebildet, dass sich eine Luftkühlung des Luftspaltes 6 aufgrund des Venturieffekt zustande kommt. Damit sind keine zusätzlichen Fremdlüfter vorzusehen, die zum einen auf ihre Funktion überwacht werden müssen und zum anderen das Gewicht des Hubschraubers 10 unnötig erhöhen.

Um die Wirbelstromverluste jedoch zu verringern, sind die Permanentmagnete 15 geschichtet ausgeführt.

Vorteilhafterweise weisen nun Antrieb 1 und Heckrotor 12 eine gemeinsame radiale und axiale Lagerung auf, und es kann auf ein Getriebe und/oder zusätzliche Lagereinheiten im Heckrotorbereich verzichtet werden.

Um das Gewicht des Hubschraubers weiter zu reduzieren sind die Statoren 4 vorteilhafterweise mit Metallverbundstoffen versehen.

Um die Ausnutzung des Antriebs 1 des Heckrotors 12 weiter zu erhöhen, weisen die Ringwicklungen 8 eine Ölkühlung auf. Dabei umfasst eine Can 9 eine konzentrisch verlaufende Ringwicklung, also eine Phase eines Stators 4, oder das gesamte Ringwicklungssystem des jeweiligen Stators 4. Dies ist prinzipiell in FIG 2 am linken Stator 4 in der unteren Hälfte dargestellt. Somit werden die Wärmeverluste des Wicklungssystems abgeführt.

Es kann sich auch ein gesamter Stator 4 mit seinem Joch, insbesondere Eisenpaket und seinem Wicklungssystem in einer Ölwanne befinden.

Die beschriebene Anordnung eines Antriebs 1 eines Heckrotors 12 ist somit als ein permanenterregter Transversalflussmotor in Duplexanordnung ausgeführt für einen Hubschrauber mit einer Leistung von 234 kW bei ca. 3600 1/min, bei einem Außendurchmesser 16 des Antriebs 1 des Heckrotors 12 von ca. 350 mm, was dem Innendurchmesser des Heckrotors 12 entspricht.

## Patentansprüche

1. Heckrotor (12) eines Hubschraubers (10) mit einem Antrieb (1), wobei der Antrieb (1) eine permanenterregte Transversalflussmaschine in Duplexanordnung umfasst, derart, dass zwischen zwei Statoren (4), die jeweils ein DrehstromRingwicklungssystem (8) aufweisen ein scheibenförmiger Läufer (5) angeordnet ist, der Permanentmagnete (15) aufweist und an dessen Außenumfang Propellerflügel (14) des Heckrotors (12) angeordnet sind, wobei das Lagerkonzept eine gemeinsame radiale Lagerung und eine gemeinsame axiale Lagerung von Antrieb (1) und Heckrotor (12) vorsieht, wobei die Axiallagerung des Heckrotors eine geregelte magnetische Axiallagerung ist, die durch ein Nullsystem des Drehstromsystems der jeweiligen Ringwicklungssysteme (8) der Statoren (4) realisiert ist, wobei die beiden Nullsysteme des Drehstromsystems der jeweiligen Ringwicklungssysteme (8) unabhängig voneinander geregelt werden, indem die Anziehungskraft nach Größe und Vorzeichen durch die Gewichtung des Stromes der Nullsysteme gesteuert wird.

2. Heckrotor (12) nach Anspruch 1, **dadurch gekennzeichnet, dass** die Permanentmagnete (15) geschichtet sind.

3. Heckrotor (12) nach einem der vorhergehenden Ansprüche, **dadurch gekennzeichnet, dass** zumindest die Ringwicklungssysteme (8) ölgekühlt sind.

4. Heckrotor (12) nach Anspruch 3, **dadurch gekennzeichnet, dass** sich das Ringwicklungssystem (8) eines jeden Stators (4) in einer Can befindet.

## Claims

1. Tail rotor (12) in a helicopter (10) with a drive (1), wherein the drive (1) comprises a permanently excited transverse flux machine in a duplex arrangement, of such a nature that there is, arranged between two stators (4) each of which has a ring winding system (8), a disk-shaped rotor (5) which has permanent magnets (15) and on the outer perimeter of which are arranged the propeller blades (14) of the tail rotor (12), wherein the bearing concept provides a common radial bearing mounting and a common axial bearing mounting for the drive (1) and the tail rotor (12), wherein the axial bearing mounting of the tail rotor is a regulated magnetic axial bearing mounting which is realised by a zero phase-sequence system of the three-phase a.c. system of the relevant ring winding system (8) of the stators (4), wherein the two zero phase-sequence systems of the three-phase a.c. systems of the respective ring winding systems (8) are regulated independently from one another by the attractive force being controlled according to magnitude and sign by the weighting of the current of the zero phase-sequence system.

2. Tail rotor (12) according to claim 1,
**characterised in that** the permanent magnets (15) are laminated.

3. Tail rotor (12) according to one of the preceding claims,
**characterised in that** at least the ring winding systems (8) are oil-cooled.

4. Tail rotor (12) according to claim 3,
**characterised in that** the ring winding system (8) of each particular stator (4) is located in a can.

## Revendications

1. Rotor de queue (12) d'un hélicoptère (10) avec un entraînement (1), dans lequel l'entraînement (1) comprend une machine à flux transversal à aimants permanents dans un agencement en duplex de telle sorte que, entre deux stators (4) qui présentent respectivement un système à enroulement annulaire à courant triphasé (8) est disposé un rotor en forme de disque (5) qui présente des aimants permanents (15) et au niveau de la périphérie externe duquel sont disposées des pales d'hélice (14) du rotor de queue (12), dans lequel le concept des paliers prévoit une disposition radiale commune et une disposition axiale commune par l'entraînement (1) et le rotor de queue (12), dans lequel la disposition axiale du rotor de queue est une disposition axiale magnétique réglée qui est réalisée par le biais d'un système homopolaire du système à courant triphasé des systèmes à enroulement annulaire (8) respectifs, dans lequel les deux systèmes homopolaires du système à courant triphasé des systèmes à enroulement annulaire (8) respectifs sont réglés indépendamment l'un de l'autre en commandant la force d'attraction selon la grandeur et le signe par le biais de la pondération du courant des systèmes homopolaires.

2. Rotor de queue (12) selon la revendication 1, **caractérisé en ce que** les aimants permanents (15) sont disposés par couches.

3. Rotor de queue (12) selon l'une des revendications précédentes, **caractérisé en ce qu'**au moins les systèmes à enroulement annulaire (8) sont refroidis à l'huile.

4. Rotor de queue (12) selon la revendication 3, **caractérisé en ce que** le système à enroulement annulaire (8) de chaque stator (4) se trouve dans un boîtier.
